# EUROPEAN PATENT APPLICATION

(11) **EP 4 006 695 A1**
(43) Date of publication of application: **01.06.2022**
(21) Application number: 21210353.5
(22) Date of filing: 25.11.2021
(51) Int. Cl.: G06F 1/26, H02J 7/00

(54) **ENHANCED POWER SUPPLYING DEVICE AND POWER SUPPLYING METHOD FOR INTELLIGENTLY ADJUSTING OUTPUT VOLTAGE**

(30) Priority: 26.11.2020 US 202063118653 P
(71) Applicant: Annvolt Technology Co., Ltd., New Taipei City 24253 (TW)
(72) Inventor: Li, Dong Sheng, 24253 New Taipei City (TW); Lin, Tung-Sheng, 24253 New Taipei City (TW)
(74) Representative: Straus, Alexander

(57) **Abstract**

The present invention discloses a power supply device for intelligently modulating an output voltage and a method thereof. The power supply device receives an external voltage source in order to modulate an external voltage from the external voltage source and provide the modulated external voltage to an electrical device with a preset power mode comprises: a power plug, a voltage modulation module, a connecting part, a control module.

## Description

### BACKGROUND OF THE INVENTION

### 1. Field of the Invention

The present invention is in related to an enhanced power supply device for modulating the output voltage and a method thereof, more particularly to an enhanced power supply device for automatically modulating various output voltages and currents based on a power mode and a method thereof.

### 2. Description of the Prior Art

In an old time, electrical devices such as laptops, home appliances, or server systems had their own driving voltages for power modes. Therefore, it was a need for adopting the corresponding power supply devices in order to allow the power supplies used in special fields to be applied to various fields simultaneously. Developers usually decide to take the firmware design for the flexibility of adjusting the output voltages, currents, and protections of the power supply devices.

As soon as the power supply device is done for manufacturing, the built-in firmware is almost impossible to be debugged and updated, not only the problems from the firmware, but also the problem of higher power demands, which limits the voltage output scopes of the power supply devices.

Some electrical devices adopt the universal serial bus (USB Type C) to be as the power ports thereof. In case of the dimensions of the connector with Type C being smaller, the pin number of the power supply device is limited as well, so as not to broadly apply in special fields.

As it can be seen, how to design a power supply device for automatically modulating various output voltages, driving voltages and currents based on the power mode of an electrical device in order to broadly increase the fields of applications becomes an important issue to persons who are skilled in the art.

### Summary of the Invention

The main object of the present invention is to provide an enhanced power supply device for automatically modulating a variety of output voltages and a method thereof.

The other object of the present invention is to provide an enhanced power supply device for automatically modulating a variety of output voltages and a method thereof based on a power mode of an electrical device.

Preferably, a power supply device for intelligently modulating an output voltage, receiving an external voltage source such as electricity socket or batteries in order to modulate an external voltage from the external voltage source and provide the modulated external voltage to an electrical device with a preset power mode comprises: a power plug, a voltage modulation module, a connecting part, a control module. The power plug receives the external voltage source. The voltage modulation module is electrically connected with the power plug, receives the external voltage and modulates the external voltage to the modulated external voltage. The connecting part is disposed and electrically connected with the electrical device, and comprises a voltage output unit and a detecting read-wright unit, wherein the voltage output unit is electrically connected with the voltage modulation module for modulating the external voltage and optionally outputs at least one output voltage to the electrical device, and the detecting read-wright unit is signally connected with the electrical device and detects the power mode of the electrical device. The control module is signally connected with the detecting read-wright unit and the voltage modulation module, and controls and outputs the output voltage to the electrical device based on the power mode detected by the detecting read-wright unit, wherein the output voltage corresponds to the power mode.

Preferably, the connecting part is a universal serial bus, and the voltage output unit comprises: two first ground pins , disposed on two diagonal corners of the universal serial bus; two second ground pins, disposed on the two diagonal corners of the universal serial bus and adjacent to the two first ground pins respectively; two first secondary power supply pins, disposed on the two opposite sides of the universal serial bus and adjacent to the two second ground pins respectively; two first main power supply pins, disposed on the two opposite sides of the universal serial bus and adjacent to the two first secondary power supply pins respectively, reserving a mechanism to output voltage in parallel with a secondary supply voltage; two second main power supply pins, disposed on the two opposite sides of the universal serial bus; two second secondary power supply pins, disposed on the two opposite sides of the universal serial bus and adjacent to the two second main power supply pins respectively, reserve a mechanism to output voltage in parallel with a main supply voltage; two third ground pins, disposed on the two diagonal corners of the universal serial bus and adjacent to the two second secondary power supply pins respectively; and two fourth ground pins, disposed on the two opposite corners of the universal serial bus and adjacent to the two third ground pins respectively; wherein the detecting read-wright unit comprises: two inserting detection pins, disposed on the two opposite corners of the universal serial bus and adjacent to the two first main power supply pins respectively; two data pins, disposed on the two opposite sides of the universal serial bus and adjacent to the two inserting detection pins respectively; two clock pins, disposed on the two opposite corners of the universal serial bus and adjacent to the two data pins respectively; a serial data pin, disposed on the universal serial bus and being between the clock pin at the same side and the second main power supply pin at the same side; a serial clock pin, disposed on the universal serial bus and diagonal to the serial data pin, being between the clock at the same side and the second main power supply at the same side.

Preferably, the control module updates firmware and debugs by means of the serial data pin and the serial clock pin, the inserting detection pins detects and communicates whether the universal serial bus is electrically connected with the electrical device and then make a decision to adopt traditional charging mode or fast charging mode. The data pins and the clock pins are also used for accepting parameter setting and status data from the electrical device.

Preferably, the control module determines the power mode of the electrical device based on the data pins and the clock pins, and controls power conduction statuses of the first secondary power supply pins, the first main power supply pins, the second main power supply pins, and the second secondary power supply pins, so as to provide a variety of output voltages.

Preferably, if the control module determines that the electrical device is a traditional universal serial bus, the first main power supply pins and the second main power supply pins are controlled by the control module to provide the output voltage with a traditional mode; if the electrical device is a fast-charge universal serial bus, the first main power supply pins and the second main power supply pins are controlled to provide, but the first secondary power supply pins and the second secondary power supply pins are optionally controlled to provide the output voltage with a fast-charge mode; and if the electrical device is a non-standard fast-charge universal serial bus, the first secondary power supply pins, the first main power supply pins, the second main power supply pins, and the second secondary power supply pins are controlled to provide the output voltage with a power enhancement mode.

Preferably, the method for the power supply intelligently modulating the output voltage, wherein the power supply receives and modulates an external voltage from an external voltage source, then the modulated external voltage is provided to an electrical device with a pre-set power demand, and comprises a power plug, a voltage modulation module, a connecting part, and a control module, the power plug being connected with the external voltage source, the connecting part having a voltage output unit and a detecting read-wright unit, the voltage output unit being electrically connected with the voltage modulation module, the detecting read-wright unit being signally connected with the electrical device, comprising the steps of:
(a) the power plug receiving the external voltage source;
(b) the voltage modulation module receiving the external voltage and modulating the external voltage to a modulated external voltage;
(c) the connecting part being disposed and electrically connected with the electrical device;
(d) the detecting read-wright unit detecting an power mode of the electrical device; and
(e) the control module controlling and outputting at least one output voltage to the electrical device based on the power mode detected by the detecting read-wright unit, wherein the output voltage corresponds to the power mode.

Preferably, the connecting part is a universal serial bus and the voltage output unit comprises: two first ground pins, disposed on two opposite corners of the universal serial bus; two second ground pins, disposed on the two opposite corners of the universal serial bus and adjacent to the two first ground pins respectively; two first secondary power supply pins, disposed on the two opposite corners of the universal serial bus and adjacent to the two second ground pins respectively; two first main power supply pins, disposed on the two opposite corners of the universal serial bus and adjacent to the two first secondary power supply pins respectively; two second main power supply pins, disposed on the two opposite corners of the universal serial bus; two second secondary power supply pins, disposed on the two opposite corners of the universal serial bus and adjacent to the two second main power supply pins respectively; two third ground pins, disposed on the two opposite corners of the universal serial bus and adjacent to the two second secondary power supply pins respectively; two fourth ground pins, disposed on the two opposite corners of the universal serial bus and adjacent to the two third ground pins respectively; and the detecting read-wright unit comprises: two inserting detection pins, disposed on the two opposite corners of the universal serial bus and adjacent to the two first main power supply pins respectively; two data pins, disposed on the two opposite corners of the universal serial bus and adjacent to the two inserting detection pins respectively; two clock pins, disposed on the two opposite corners of the universal serial bus and adjacent to the two data pins respectively; a serial data pin, disposed on the universal serial bus and adjacent to a position between one of the data pins and one of the second main power supply pins with the same side as said one of the data pins; and a serial clock pin, disposed on the universal serial bus and diagonal to the serial data pin, being between the data pins at the same side and the second main power supply pins at the same side.

Preferably, the step (a) further comprises a step (a1) of: the control module updating firmware and debugging by means of the serial data pin and the serial clock pin; the step (c) further comprises a step (c1) of: the inserting detection pins detecting and communicating whether the universal serial bus is electrically connected with the electrical device (1); and the step (d) further comprises a step (d1) of: the data pins and the clock pins accepting at least one parameter setting and status data from the electrical device (1).

Preferably, a further step (d2), after the step (d1), of: the control module determining the power mode of the electrical device (1) based on the data pins and the clock pins, and controlling power conduction statuses of the first secondary power supply pins, the first main power supply pins, the second main power supply pins, and the second secondary power supply pins, so as to provide a variety of output voltages.

Preferably, the step (d2) further comprises the steps of:
(d21) if the control module determines that the electrical device (1) is a traditional universal serial bus, the first main power supply pins and the second main power supply pins being controlled by the control module to provide the output voltage with a traditional mode;
(d22) if the electrical device is a fast-charge universal serial bus, the first main power supply pins and the second main power supply pins being controlled, and the first secondary power supply pins (A3, B3) and the second secondary power supply pins being optionally controlled to provide the output voltage with a fast-charge mode; and
(d23) if the electrical device is a non-standard fast-charge universal serial bus, the first secondary power supply pins, the first main power supply pins, the second main power supply pins, and the second secondary power supply pins being controlled to provide the output voltage with a power enhancement mode.

The accompanying drawings are incorporated in and constitute a part of this application and, together with the description, serve to explain the principles of the invention in general terms. Like numerals refer to like parts throughout the disclosure.

### BRIEF DESCRIPTION OF THE DRAWINGS

The objects, spirits, and advantages of the preferred embodiments of the present invention will be readily understood by the accompanying drawings and detailed descriptions, wherein:
Fig. 1 illustrates a schematic view of a first embodiment of the power supply device for intelligently modulating an output voltage of the present invention;
Fig. 2 illustrates a flow chart of the method for the power supply intelligently modulating the output voltage of the present invention;
Fig. 3 illustrates a schematic view of a connecting part of the power supply device for intelligently modulating the output voltage of the present invention;
Fig. 4 illustrates a detailed flow chart of Fig. 2 of the present invention;
Fig. 5 illustrates a detailed flow chart of Fig. 4 of the present invention; and
Fig. 6 illustrates a schematic view of a circuit diagram of the power supply device for intelligently modulating the output voltage of the present invention.

### DETAILED DESCRIPTION OF THE INVENTION

In order to describe in the detail technical content, structural features, achieved objectives and effects of the instant application, the following detailed descriptions are given in conjunction with the drawings and specific embodiments. It should be understood that these embodiments are only used to illustrate the application and not to limit the scope of the instant application.

All of the figures of the present invention are schematic views, and shown the relationships among the modules and signals, but the ratios of the circuits' dimensions, the signals' waveforms and the frequencies are not included.

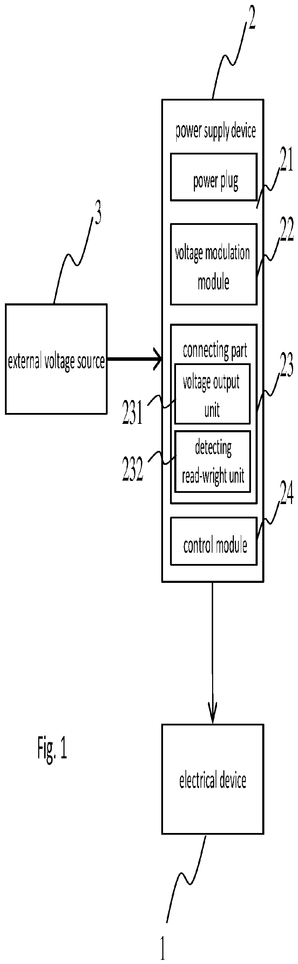

The present invention discloses an enhanced power supply device for modulating an output voltage and a method thereof. Referring to Fig. 1, which illustrates a schematic view of a first embodiment of the power supply device for intelligently modulating an output voltage of the present invention. A power supply device 2 receives an external voltage source 3 in order to modulate an external voltage from the external voltage source 3 and provide the modulated external voltage to an electrical device 1 with a preset power mode. For the embodiment, the power supply device 2 is to receive the external voltage provided by a electricity socket or a battery, and the electrical device 1 is laptop computer, home appliance, server equipment, etc. The power supply device 2 includes a power plug 21, a voltage modulation module 22, a connecting part 23, and a control module 24. The power plug 21 is electrically connected with the voltage modulation module 22. The connecting part 23 includes a voltage output unit 231 and a detecting read-wright unit 232, wherein the voltage output unit 231 is electrically connected with the voltage modulation module 22, and the detecting read-wright unit 232 is signally connected with the electrical device 1.

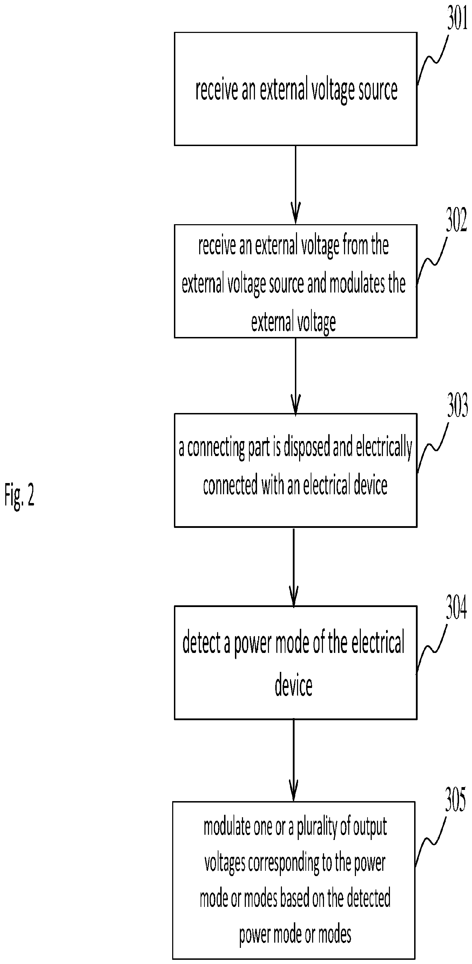

With reference to Fig. 2, which illustrates a flow chart of the method for the power supply intelligently modulating the output voltage of the present invention. The method includes the following steps listed below.
(S301) The power plug 21 receives the external voltage source 3, such as that of the power supply device 2 receiving the external voltage provided by a electricity socket or a battery;
(S302) the voltage modulation module 22 receives an external voltage from the external voltage source 3 and modulates the external voltage to a modulated external voltage;
(S303) the connecting part 23 is disposed and electrically connected with the electrical device 1;
(S304) the detecting read-wright unit 232 detects a power mode of the electrical device 1; and
(S305) the control module 24 controls and outputs a plurality of output voltages to the electrical device 1 based on the power mode detected by the detecting read-wright unit 232, wherein the output voltages correspond to the power mode, and all the output voltages can be in parallel and modulated to deliver power for the electrical device 1.

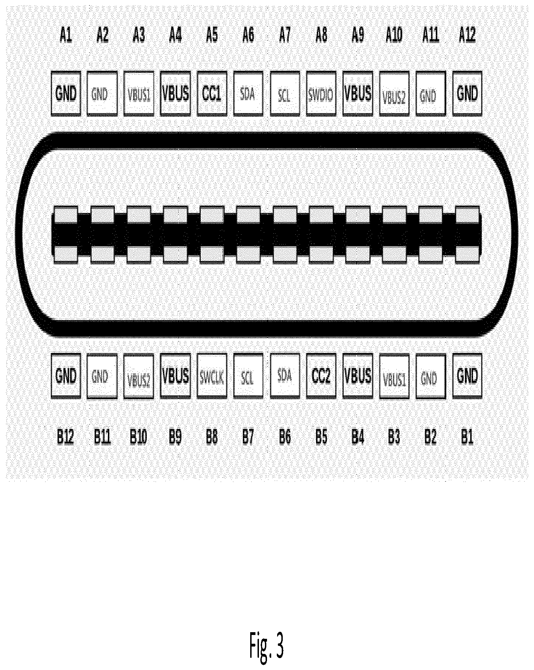

With reference to Fig. 3, which illustrates a schematic view of the connecting part of the power supply device for intelligently modulating the output voltage of the present invention. The connecting part 23 is a universal serial bus and includes: two first ground pins (GND) A1, B1, two second ground pins (GND) A2, B2, two first secondary power supply pins (VBUS1) A3, B3, two first main power supply pins (VBUS) A4, B4, two second main power supply pins (VBUS) A9, B9, two second secondary power supply pins (VBUS2) A10, B10, two third ground pins (GND) A11, B11, and two fourth ground pins (GND) A12, B12.

The detecting read-wright unit 232 includes two inserting detection pins (CC1, CC2) A5, B5, two data pins (SDA) A6, B6, two clock pins (SCL) A7, B7, a serial data pin (SWDIO) A8, and a serial clock pin (SWCLK) B8.

The two first ground pins (GND) A1, B1 are disposed on two diagonal corners of the universal serial bus. The two second ground pins (GND) A2, B2 are disposed on the two diagonal corners of the universal serial bus and adjacent to the two first ground pins (GND) A1, B1 respectively. The two first secondary power supply pins (VBUS1) A3, B3 are disposed on the two opposite sides of the universal serial bus and adjacent to the two second ground pins (GND) A2, B2 respectively. The two first main power supply pins (VBUS) A4, B4 are disposed on the two opposite sides of the universal serial bus and adjacent to the two first secondary power supply pins (VBUS1) A3, B3 respectively. The two second main power supply pins (VBUS) A9, B9 are disposed on the two opposite sides of the universal serial bus. The two second secondary power supply pins (VBUS2) A10, B10 are disposed on the two opposite sides of the universal serial bus and adjacent to the two second main power supply pins (VBUS) A9, B9 respectively.

The two third ground pins (GND) A11, B11are disposed on the two diagonal corners of the universal serial bus and adjacent to the two second secondary power supply pins (VBUS2) A10, B10 respectively. The two fourth ground pins (GND) A12, B12 are disposed on the two diagonal corners of the universal serial bus and adjacent to the two third ground pins (GND) A11, B11 respectively. The two inserting detection pins (CC1, CC2) A5, B5 are disposed on the two opposite sides of the universal serial bus and adjacent to the two first main power supply pins (VBUS) A4, B4 respectively. The two data pins (SDA) A6, B6 are disposed on the two opposite sides of the universal serial bus and adjacent to the two inserting detection pins (CC1, CC2) A5, B5 respectively. The two clock pins (SCL) A7, B7 are disposed on the two opposite sides of the universal serial bus and adjacent to the two data pins (SDA) A6, B6 respectively. The serial data pin (SWDIO) A8 is disposed on the universal serial bus and between the clock pin A7 at the same side and the second main power supply pin (VBUS) A9 at the same side.

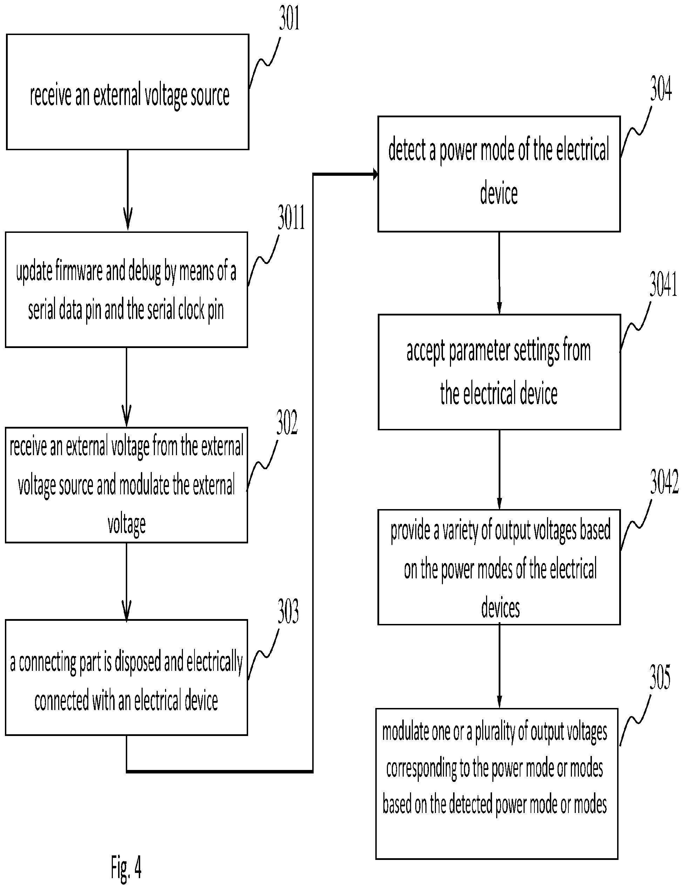

According to Fig. 4, which is a detailed flow chart of Fig. 2 of the present invention. A step (S3011) after the step (S301) is of: the control module 24 updating firmware and debugging by means of the serial data pin (SWDIO) A8 and the serial clock pin (SWCLK) B8. A step (S3031) after the step (S303) is of: the inserting detection pins (CC1, CC2) A5, B5 detecting and communicating whether the universal serial bus is electrically connected with the electrical device 1. A step (S3041) after the step (S304) is of: the data pins (SDA) A6, B6 and the clock pins (SCL) A7, B7 accepting parameter settings and status data from the electrical device 1, wherein the parameter settings can be voltage and current, start-up time, over-voltage, over-current and over-temperature protection points, output voltage compensation parameters, report back the output voltage, current, temperature, ID inside the power supply of the VBUS, VBUS1 and VBUS2, or an output voltage mode is set as a constant voltage (CV) or a constant current mode (CC-CV mode).

A step (S3042) after the step (S3041) is of: the control module 24 determining the power mode of the electrical device 1 based on the data pins (SDA) A6, B6 and the clock pins (SCL) A7, B7, and controlling power conduction statuses of the first secondary power supply pins (VBUS1) A3, B3, the first main power supply pins (VBUS) A4, B4, the second main power supply pins (VBUS) A9, B9, and the second secondary power supply pins (VBUS2) A10, B10, so as to provide a variety of output voltages.

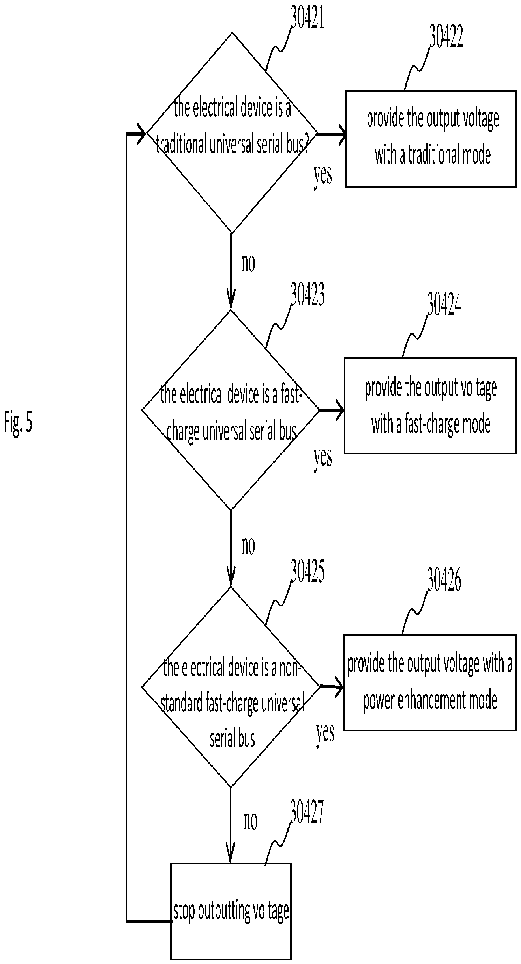

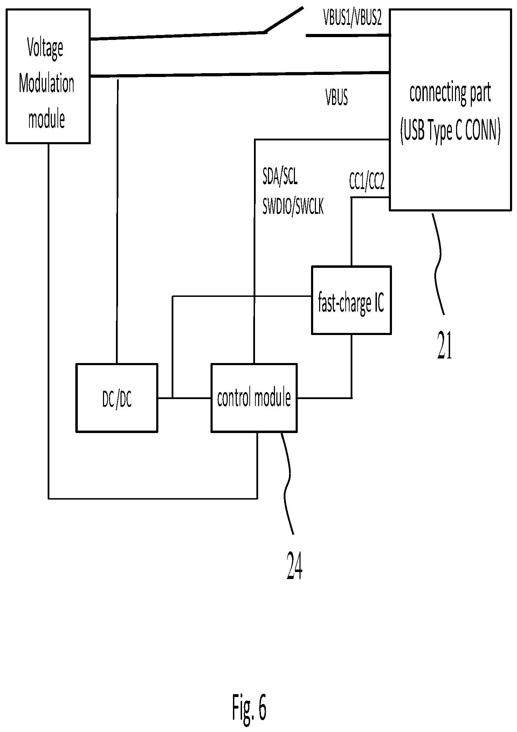

According to Fig. 5 and Fig. 6, Fig. 5 is a detailed flow chart of Fig. 4 of the present invention, and Fig. 6 illustrates a schematic view of a circuit diagram of the power supply device for intelligently modulating the output voltage of the present invention. The step (S3042) further includes the following steps listed below.
(S30421) the control module 24 determines whether the electrical device 1 is a traditional universal serial bus (Legacy USB), if yes, going to the step (S30422), otherwise, going to the step (S30423);
(S30422) the first main power supply pins (VBUS) A4, B4 and the second main power supply pins (VBUS) A9, B9 are controlled by the control module 24 to provide the output voltage with a traditional mode (5V);
(S30423) the control module 24 determines whether the electrical device 1 is a fast-charge universal serial bus (USB type C PD), if yes, going to the step (S30424), otherwise, going to the step (S30425);
(S30424) the first main power supply pins (VBUS) A4, B4 and the second main power supply pins (VBUS) A9, B9 are controlled, and the first secondary power supply pins (VBUS1) A3, B3 and the second secondary power supply pins (VBUS2) A10, B10 are optionally controlled to provide the output voltage with a fast-charge mode (PD mode);
(S30425) the control module 24 determines whether the electrical device 1 is a non-standard fast-charge universal serial bus, if yes, going to the step (S30426), otherwise, going to the step (S30427);
(S30426) the first secondary power supply pins (VBUS1) A3, B3, the first main power supply pins (VBUS) A4, B4, the second main power supply pins (VBUS) A9, B9, and the second secondary power supply pins (VBUS2) A10, B10 are controlled to provide the output voltage with a power enhancement mode; and
(S30427) stop outputting voltage and return to the step (S30421).

The present invention discloses the enhanced power supply device for modulating the output voltage and the method thereof. As aforesaid, the power mode of the electrical device is detected by means of the detecting read-wright unit, then the control module controls the voltage output unit to output the output voltage to the electrical device based on the power mode, wherein the output voltage corresponds to the power mode. In addition to VBUS as a main power source, VBUS1 and VBUS2 provide additional voltage source. That is, VBUS1 and VBUS2 voltage sources can be connected in parallel with VBUS to provide larger current and generate higher output voltage. Further, VBUS1 and VBUS2 are set as other voltage sources different from VBUS, in order to be the auxiliary voltage sources of the control module (MCU), a cooling fan, etc. Through VBUS, VBUS1 and VBUS2, which are parallel output voltage combinations, including 3.3V, 5V, 9V, 12V, 15V, 19V, 20V, 24V, 28V, 32V, 36V, 48V, 52V, 56V, but not limited to other non-mainstream voltage, etc. The present invention not only automatically modulates a variety of output voltages, but also adjusts the output driving voltages depending on the power mode of the electrical device, so as to broadly increase the scope of usage.

Although the invention has been disclosed and illustrated with reference to particular embodiments, the principle involved are susceptible for use in numerous other embodiments that will be apparent to persons skilled in the art. This invention is, therefore, to be limited only as indicated by the scope of the appended claims.

## Claims

1. A power supply device for intelligently modulating an output voltage, receiving an external voltage source in order to modulate an external voltage from the external voltage source and provide the modulated external voltage to an electrical device with a preset power mode, comprising:
a power plug, receiving the external voltage source;
a voltage modulation module, electrically connected with the power plug, receiving the external voltage and modulating the external voltage to the modulated external voltage;
a connecting part, disposed and electrically connected with the electrical device, comprising:
a voltage output unit, electrically connected with the voltage modulation module for modulating the external voltage and optionally outputting at least one output voltage to the electrical device; and
a detecting read-wright unit, signally connected with the electrical device and detecting the power mode of the electrical device; and
a control module, signally connected with the detecting read-wright unit and the voltage modulation module, controlling and outputting the output voltage to the electrical device based on the power mode detected by the detecting read-wright unit, wherein the output voltage corresponds to the power mode.

2. The power supply device for intelligently modulating an output voltage according to claim 1, wherein the connecting part is a universal serial bus, and the voltage output unit comprises:
two first ground pins, disposed on two diagonal corners of the universal serial bus;
two second ground pins, disposed on the two diagonal corners of the universal serial bus and adjacent to the two first ground pins respectively;
two first secondary power supply pins, disposed on the two opposite sides of the universal serial bus and adjacent to the two second ground pins respectively;
two first main power supply pins, disposed on the two opposite sides of the universal serial bus and adjacent to the two first secondary power supply pins respectively;
two second main power supply pins, disposed on the two opposite sides of the universal serial bus;
two second secondary power supply pins, disposed on the two opposite sides of the universal serial bus and adjacent to the two second main power supply pins respectively;
two third ground pins, disposed on the two diagonal corners of the universal serial bus and adjacent to the two second secondary power supply pins respectively;
two fourth ground pins, disposed on the two opposite corners of the universal serial bus and adjacent to the two third ground pins respectively; and
the detecting read-wright unit comprises:
two inserting detection pins, disposed on the two opposite corners of the universal serial bus and adjacent to the two first main power supply pins respectively;
two data pins, disposed on the two opposite sides of the universal serial bus and adjacent to the two inserting detection pins respectively;
two clock pins, disposed on the two opposite corners of the universal serial bus and adjacent to the two data pins respectively;
a serial data pin, disposed on the universal serial bus and being between the clock pin at the same side and the second main power supply pin at the same side; and
a serial clock pin, disposed on the universal serial bus and diagonal to the serial data pin, being between the clock at the same side and the second main power supply pin at the same side.

3. The power supply device for intelligently modulating an output voltage according to claim 2, wherein the control module updates firmware and debugs by means of the serial data pin and the serial clock pin, the inserting detection pins detects and communicates whether the universal serial bus is electrically connected with the electrical device, and then make a decision to adopt traditional charging mode or fast charging mode, the data pins and the clock pins being for accepting parameter setting and status data from the electrical device.

4. The power supply device for intelligently modulating an output voltage according to claim 3, wherein the control module determines the power mode of the electrical device based on the data pins and the clock pins, and controls power conduction statuses of the first secondary power supply pins, the first main power supply pins, the second main power supply pins, and the second secondary power supply pins, so as to provide a variety of output voltages.

5. The power supply device for intelligently modulating an output voltage according to claim 4, wherein if the control module determines that the electrical device is a traditional universal serial bus, the first main power supply pins and the second main power supply pins are controlled by the control module to provide the output voltage with a traditional mode; if the electrical device is a fast-charge universal serial bus, the first main power supply pins and the second main power supply pins are controlled to provide, but the first secondary power supply pins and the second secondary power supply pins are optionally controlled to provide the output voltage with a fast-charge mode; and if the electrical device is a non-standard fast-charge universal serial bus, the first secondary power supply pins, the first main power supply pins, the second main power supply pins, and the second secondary power supply pins are controlled to provide the output voltage with a power enhancement mode.

6. A method for a power supply intelligently modulating an output voltage, wherein the power supply receives and modulates an external voltage from an external voltage source, then the modulated output voltage is provided to an electrical device with a pre-set power demand, and comprises a power plug, a voltage modulation module, a connecting part, and a control module, the power plug being connected with the external voltage source, the connecting part having a voltage output unit and a detecting read-wright unit, the voltage output unit being electrically connected with the voltage modulation module, the detecting read-wright unit being signally connected with the electrical device, comprising the steps of:
(a) the power plug receiving the external voltage source;
(b) the voltage modulation module receiving the external voltage and modulating the external voltage to a modulated external voltage;
(c) the connecting part being disposed and electrically connected with the electrical device;
(d) the detecting read-wright unit detecting a power mode of the electrical device; and
(e) the control module controlling and outputting at least one output voltage to the electrical device based on the power mode detected by the detecting read-wright unit, wherein the output voltage corresponds to the power mode.

7. The method for the power supply intelligently modulating the output voltage according to claim 6, wherein the connecting part is a universal serial bus and the voltage output unit comprising:
two first ground pins, disposed on two opposite corners of the universal serial bus;
two second ground pins, disposed on the two opposite corners of the universal serial bus and adjacent to the two first ground pins respectively;
two first secondary power supply pins, disposed on the two opposite corners of the universal serial bus and adjacent to the two second ground pins respectively;
two first main power supply pins, disposed on the two opposite corners of the universal serial bus and adjacent to the two first secondary power supply pins respectively;
two second main power supply pins, disposed on the two opposite corners of the universal serial bus;
two second secondary power supply pins, disposed on the two opposite corners of the universal serial bus and adjacent to the two second main power supply pins respectively;
two third ground pins, disposed on the two opposite corners of the universal serial bus and adjacent to the two second secondary power supply pins respectively;
two fourth ground pins, disposed on the two opposite corners of the universal serial bus and adjacent to the two third ground pins respectively; and
the detecting read-wright unit comprises:
two inserting detection pins, disposed on the two opposite corners of the universal serial bus and adjacent to the two first main power supply pins respectively;
two data pins, disposed on the two opposite corners of the universal serial bus and adjacent to the two inserting detection pins respectively;
two clock pins, disposed on the two opposite corners of the universal serial bus and adjacent to the two data pins respectively;
a serial data pin, disposed on the universal serial bus and adjacent to a position between one of the data pins and one of the second main power supply pins with the same side as said one of the data pins; and
a serial clock pin, disposed on the universal serial bus and diagonal to the serial data pin, being between the data pins at the same side and the second main power supply pins at the same side.

8. The method for the power supply intelligently modulating the output voltage according to claim 7, wherein the step (a) further comprises a step (a1) of: the control module updating firmware and debugging by means of the serial data pin and the serial clock pin (B8); the step (c) further comprises a step (c1) of: the inserting detection pins detecting and communicating whether the universal serial bus is electrically connected with the electrical device; and the step (d) further comprises a step (d1) of: the data pins and the clock pins accepting at least one parameter setting and status data from the electrical device.

9. The method for the power supply intelligently modulating the output voltage according to claim 8, wherein a further step (d2), after the step (d1), of: the control module determining the power mode of the electrical device based on the data pins and the clock pins, and controlling power conduction statuses of the first secondary power supply pins, the first main power supply pins, the second main power supply pins, and the second secondary power supply pins, so as to provide a variety of output voltages.

10. The method for the power supply intelligently modulating the output voltage according to claim 9, wherein the step (d2) further comprises the steps of:
(d21) if the control module determines that the electrical device is a traditional universal serial bus, the first main power supply pins and the second main power supply pins being controlled by the control module to provide the output voltage with a traditional mode;
(d22) if the electrical device is a fast-charge universal serial bus, the first main power supply pins and the second main power supply pins being controlled, and the first secondary power supply pins and the second secondary power supply pins being optionally controlled to provide the output voltage with a fast-charge mode; and
(d23) if the electrical device is a non-standard fast-charge universal serial bus, the first secondary power supply pins, the first main power supply pins, the second main power supply pins, and the second secondary power supply pins being controlled to provide the output voltage with a power enhancement mode.
